# DEMANDE DE BREVET EUROPEEN

(11) **EP 1 291 530 A1**
(43) Date de publication de la demande: **12.03.2003**
(21) Numéro de dépôt: 02291836.1
(22) Date de dépôt: 19.07.2002
(51) Int. Cl.: F04D 29/58, F04D 29/66, F04C 29/06

(54) **Dispositif de pompage**

(30) Priorité: 05.09.2001 FR 0111461
(71) Demandeur: Peugeot Citroen Automobiles SA, 92200 Neuilly sur Seine (FR)
(72) Inventeur: Villadier, Bernard, 91370 Verrieres le Buisson (FR); Campanella, Thierry, 91310 Linas (FR)
(74) Mandataire: Robert, Jean-François

(57) **Abrégé**

La présente invention concerne un dispositif de pompage de l'air d'alimentation d'un organe fonctionnel de véhicule automobile, comprenant une pompe rotative (2) à ailettes entraînées en rotation par un moteur électrique (1), ladite pompe (2) étant logée dans une enceinte phonique (3) destinée à supprimer ou atténuer ses bruits de fonctionnement, tandis qu'un espace interne (5) de circulation d'air est ménagé entre l'enceinte (3) et au moins une partie du corps de la pompe (2), ledit espace interne (5) communiquant d'une part avec le milieu extérieur (6) de l'enceinte (3) par une première ouverture (o1) ménagée sur l'enceinte (3), et d'autre part avec un orifice d'aspiration (2a) de la pompe (2), de sorte que l'air du milieu extérieur (6) passe par l'ouverture (o1) et transite par l'espace interne (5) lorsqu'il est aspiré par la pompe (2), pour favoriser le refroidissement de la pompe (2) par conduction thermique.

## Description

La présente invention concerne un dispositif de pompage de l'air d'alimentation d'un organe fonctionnel d'un véhicule automobile.

Elle se rapporte plus particulièrement à un dispositif de pompage comprenant une pompe rotative à ailettes entraînées en rotation par un moteur électrique.

De façon générale, les dispositifs de pompage d'un gaz tel que l'air sont relativement bruyants. Ce phénomène est d'autant plus accentué que le débit et la pression d'air en sortie de pompe doivent être maintenus à un niveau élevé. Ce fait résulte des efforts et frottements générés par la compression de l'air au sein même de la pompe.

Une solution connue consiste à loger une telle pompe dans une enceinte isolée phoniquement. Des problèmes d'échauffement de la pompe se posent alors généralement puisque celle-ci n'est plus à l'air libre.

Un autre inconvénient réside dans l'encombrement et/ou l'excès de matière de l'enceinte lorsque la pompe doit être étroitement reliée à un organe adjacent tel qu'un moteur ou un système de filtrage de l'air.

On notera également qu'une telle enceinte peut gêner l'accès à certains organes nécessitant une maintenance régulière. Un système de filtrage peut par exemple nécessiter le changement périodique d'une cartouche de filtrage.

Le but de la présente invention est de proposer un dispositif de pompage de l'air alimentant un organe fonctionnel d'un véhicule automobile qui permet de pallier les inconvénients ci-dessus.

A cet effet, la présente invention concerne un dispositif de pompage de l'air d'alimentation d'un organe fonctionnel de véhicule automobile, comprenant une pompe rotative à ailettes entraînées en rotation par un moteur électrique, ladite pompe étant logée dans une enceinte phonique destinée à supprimer ou atténuer ses bruits de fonctionnement, un espace interne de circulation d'air étant ménagé entre l'enceinte et au moins une partie du corps de la pompe, ledit espace interne communiquant d'une part avec le milieu extérieur de l'enceinte par une première ouverture ménagée sur l'enceinte, et d'autre part avec un orifice d'aspiration de la pompe, de sorte que l'air du milieu extérieur passe par l'ouverture et transite par l'espace interne lorsqu'il est aspiré par la pompe, pour favoriser le refroidissement de la pompe par conduction thermique.

Le dispositif de pompage suivant l'invention peut également comporter une ou plusieurs des caractéristiques suivantes :
- le dispositif comprend un boîtier de filtrage d'air situé à l'extérieur de l'enceinte phonique, dont les orifices d'entrée et de sortie d'air communiquent respectivement avec l'espace interne de l'enceinte via une seconde ouverture et avec l'orifice d'aspiration de la pompe via une troisième ouverture ménagées sur l'enceinte, de sorte que l'air du milieu extérieur transite par l'espace interne puis par le boîtier de filtrage lorsqu'il est aspiré par la pompe,
- le boîtier de filtrage est solidaire de l'enceinte phonique,
- un orifice de refoulement d'air en sortie de la pompe communique avec l'organe fonctionnel du véhicule via une quatrième ouverture ménagée sur l'enceinte phonique, permettant le passage de l'air refoulé vers l'organe fonctionnel,
- l'enceinte phonique comporte un carter constitué d'une plaque repliée sensiblement selon deux angles droits de façon à présenter la forme générale d'un U apte à enfourcher le corps de la pompe,
- le boîtier de filtrage d'air a une forme générale cylindrique fixée sur la partie centrale du carter en U, de façon sensiblement parallèle aux arêtes de pliage du U, du côté opposé aux branches du U,
- l'enceinte phonique comprend un support constitué d'une plaque repliée sensiblement en forme de L assemblée et solidarisée avec le U du carter de façon à présenter la forme générale d'un récipient ouvert du côté opposé à la partie courte du L, tandis qu'un couvercle sensiblement plat de fermeture du récipient est assemblé et solidarisé avec le support et le carter de façon sensiblement parallèle à la partie courte du support en L,
- la pompe est fixée sur la partie longue du support en L à l'intérieur de l'enceinte phonique, l'axe de rotation des ailettes étant sensiblement perpendiculaire au couvercle, et étant solidarisé en rotation avec un axe d'entraînement du moteur qui traverse ledit couvercle via une ouverture,
- le corps du moteur est solidarisé avec le couvercle,
- au moins une partie de l'enceinte phonique est recouverte intérieurement d'un revêtement isolant phonique,
- au moins une paroi formant une chicane est disposée entre l'enceinte phonique et le corps de la pompe pour assurer qu'une surface minimale donnée du corps de la pompe sera mise au contact de l'air venant du milieu extérieur pour favoriser le refroidissement de la pompe lors de l'aspiration, et
- une pluralité de parois, de forme sensiblement plate, relie la surface périphérique du corps de la pompe à l'enceinte phonique, dans des plans passant sensiblement par l'axe de rotation des ailettes, les parois étant conformées pour séparer différentes chambres de circulation d'air autour de la pompe, communiquant entre elles par des orifices ménagés en quinconce à l'une ou l'autre des extrémités de chaque paroi.

La présente invention concerne également un sous-ensemble de pile à combustible à électrolyte polymère, du type alimentée en hydrogène et en air, possédant une ou plusieurs des caractéristiques précédentes.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 représente une vue en perspective du dispositif de pompage de l'air d'alimentation d'un organe fonctionnel selon la présente invention,
- la figure 2 représente une vue en perspective éclatée du dispositif de pompage de la figure 1,
- la figure 3 représente une vue en perspective du dispositif de pompage de la figure 1, sans le carter de l'enceinte phonique,
- la figure 4 représente une variante de réalisation selon l'invention du dispositif de pompage de la figure 3, sans le carter de l'enceinte phonique.

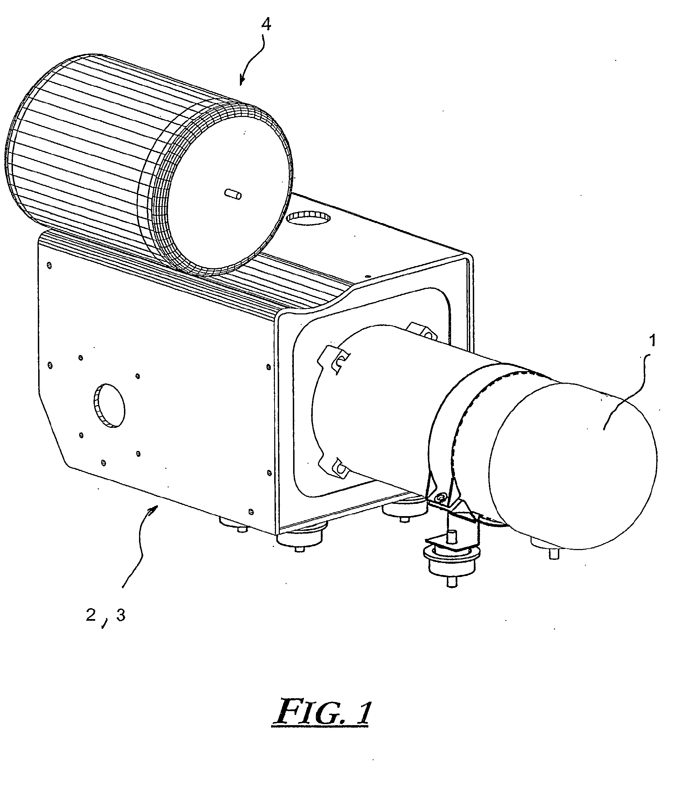

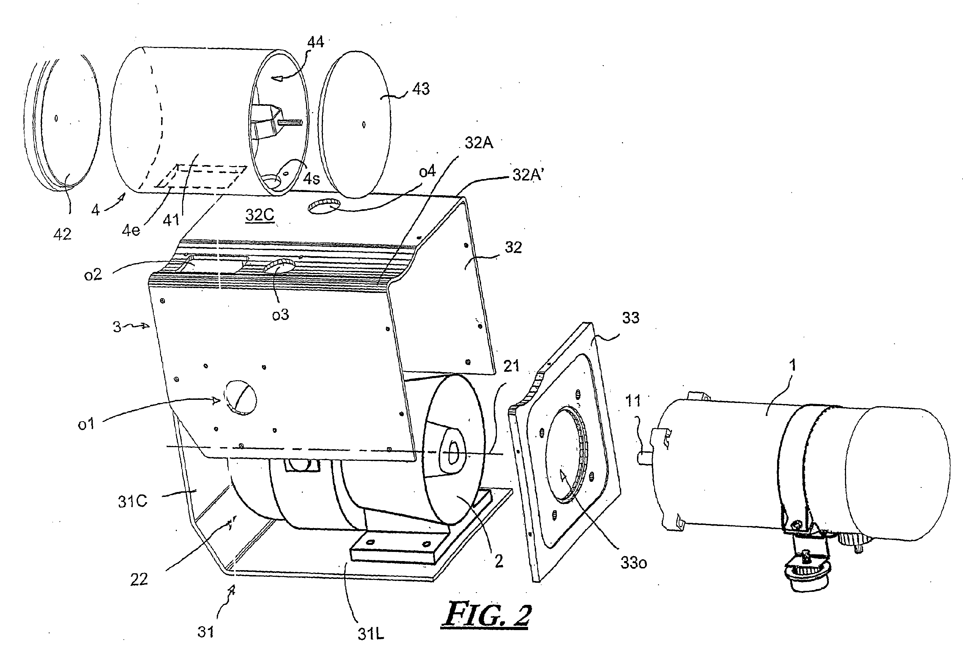

On a représenté aux figures 1 et 2 le dispositif de pompage de l'air d'alimentation d'un organe fonctionnel d'un véhicule automobile conforme à l'invention.

Ce dispositif comprend une pompe rotative 2 à ailettes (non représentées) dont l'axe central 21 supportant les ailettes est entraîné en rotation par un moteur électrique 1 via l'axe d'entraînement 11 de ce moteur 1.

Une telle pompe à air peut être prévue pour alimenter un organe fonctionnel quelconque du véhicule, nécessitant une telle alimentation, par exemple un moteur thermique.

Dans un autre exemple de réalisation, le dispositif selon l'invention pourra avantageusement être utilisé pour alimenter une pile à combustible à électrolyte polymère, qui exige généralement alimentation en air relativement importante. On comprendra que la pompe à air selon l'invention pourra être à débit et pression constants malgré les variations de charge, comme cela peut être souhaité pour les besoins de l'organe fonctionnel. Le dispositif selon l'invention fonctionne également avec une pompe à débit et pression directement tributaires de la charge, tels que les compresseurs d'air classiques.

Pour supprimer ou atténuer les bruits de fonctionnement de la pompe lors de son fonctionnement, la pompe 2 peut être logée dans une enceinte phonique 3. Celle-ci forme un caissonnage constitué de plusieurs éléments assemblés entre eux.

Par exemple, l'enceinte 3 est constituée d'un support 31, d'un carter 32 et d'un couvercle 33. Le support 31 est une plaque sensiblement rectangulaire repliée au niveau d'une ou plusieurs arêtes de façon à présenter la forme générale d'un L, ayant une partie longue 31L et une partie courte 31C. Avantageusement, la pompe 2 est fixée sur la partie longue 31L du L, l'axe de rotation 21 des ailettes étant parallèle à la direction longitudinale de la partie longue 31L. La longueur de la partie longue 31L du L est de préférence sensiblement égale ou légèrement supérieure à la dimension de la pompe 2 dans cette même direction.

Le carter 32 est constitué d'une plaque sensiblement rectangulaire repliée deux fois à angle droit de façon à présenter la forme générale d'un U apte à enfourcher le corps de la pompe 2. Les dimensions de la partie centrale du U correspondent en effet sensiblement à celles de la partie longue 31L du support en L, de sorte que le support 31 et le carter 32 peuvent être emboîtés pour former un récipient dont la partie courte 31 L du L constitue le fond.

Le couvercle 33 est constitué d'une plaque dont les dimensions correspondent sensiblement à celles de la partie courte 31C du L, de sorte que le couvercle 33 peut être monté sur le support 31 et le carter 32 pour fermer le récipient, comme cela est représenté aux figures 1 à 3.

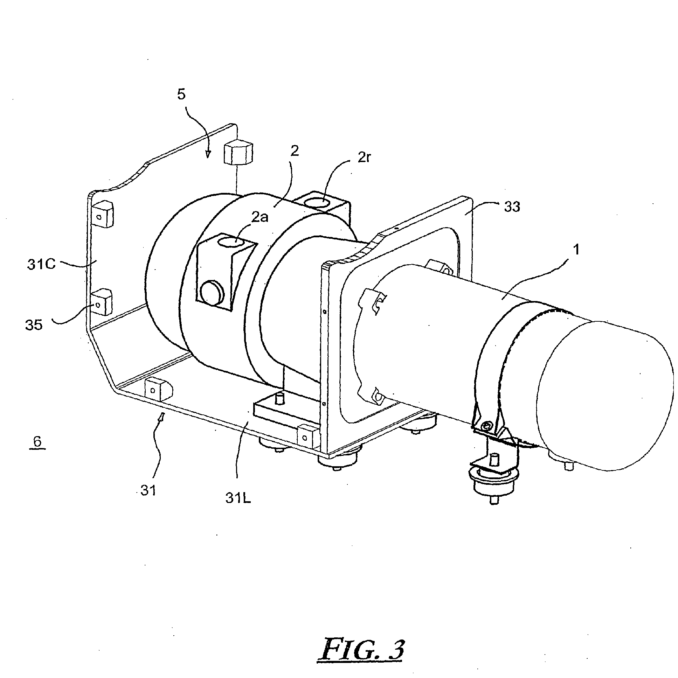

Les différents éléments peuvent être maintenus solidaires par des moyens de fixation démontables, tels que des vis coopérant avec des trous formés dans des pattes de fixation (figure 3).

La fixation de la pompe 2 sur le support 31 est également assurée par des vis traversant deux oreilles solidaires du corps de la pompe comme cela est visible aux figures 2 et 3.

Pour encore améliorer ses performances sur le plan de l'isolation phonique, l'enceinte 3 peut être recouverte intérieurement d'un revêtement connu de l'homme de l'art pour ses propriétés d'isolant phonique.

Outre son rôle constitutif de l'enceinte phonique 3, le couvercle 33 permet également le positionnement et le maintien du moteur électrique 1 de façon précise. Le moteur 1 est en effet fixé sur la face externe du couvercle 33, de sorte que son axe d'entraînement 11 traverse le couvercle 33 via une ouverture 33o ménagée sur le couvercle 33. A l'intérieur de l'enceinte phonique 2, l'axe d'entraînement 11 du moteur est lié en rotation à l'axe de rotation 21 des ailettes.

Précisons que de façon traditionnelle, la pompe à air 2 possède un orifice d'aspiration d'air 2a par lequel l'air entre dans la pompe et un orifice de refoulement 2r par lequel l'air précédemment aspiré ressort pour être conduit vers l'organe fonctionnel du véhicule (figure 3).

Selon l'invention, un espace interne 5 de circulation d'air est ménagé entre l'enceinte 3 et la pompe 2 de sorte que l'air venant du milieu extérieur 6 à l'enceinte 3 et attiré par l'orifice d'aspiration 2a de la pompe 2 transite préalablement par cet espace 5 avant de pénétrer dans la pompe 2. Précisons que l'air du milieu extérieur 6 s'introduit dans l'espace interne 5 via une première ouverture o1 ménagée dans le carter 32, par exemple dans l'une de ses branches comme représenté à la figure 2. Au contact de la surface externe de la pompe 2, l'air venant du milieu extérieur 6, qui peut avantageusement être de l'air frais, peut ainsi contribuer activement au refroidissement de la pompe 2 par conduction thermique.

Le dispositif de pompage de l'air selon l'invention prévoit la fixation d'un boîtier de filtrage 4 de l'air sur l'enceinte phonique 3, à l'extérieur de celle-ci. Dans l'application évoquée précédemment de l'alimentation en air d'une pile à combustible, un tel boîtier de filtrage 4 permet avantageusement d'isoler les poussières mais peut également servir à éliminer au moins partiellement d'autres composants de l'air, par exemple le dioxyde de carbone qui peut être nuisible au fonctionnement de la pile à combustible.

Comme le montrent les figures 1 et 2, le boîtier de filtrage 4 peut avoir une forme générale cylindrique ou plus précisément la forme générale d'un tube 41 fermé à chacune de ses extrémités par deux couvercles 42, 43. L'une et/ou l'autre des extrémités est généralement démontable de façon à autoriser le remplacement d'une cartouche de filtrage, communément appelée « filtre », logée dans le tube. Le remplacement d'une cartouche ou d'un filtre est en effet un acte de maintenance classique pour la majorité des systèmes de filtrage connus.

Avantageusement, le boîtier de filtrage 4 selon l'invention est fixé sur le carter 32 de l'enceinte phonique 3, à l'extérieur de celle-ci, pour faciliter tout acte de maintenance. Il est par exemple fixé sur la partie centrale 32C du carter 32 en U, c'est à dire entre les deux arêtes d'angle 32A, 32A'. Pour un meilleur positionnement et un maintien plus ferme du boîtier de filtrage 4 contre le carter 32, celui-ci peut avoir une forme concave cylindrique coopérant avec le tube du boîtier de filtrage 4, de sorte que les deux éléments s'emboîtent l'un avec l'autre.

De façon classique, le boîtier de filtrage 4 comporte un orifice d'entrée 4e d'air à filtrer et un orifice de sortie 4s d'air filtré. Ces orifices d'entrée 4e et de sortie 4s d'air peuvent être situés en regard d'une seconde o2 et d'une troisième o3 ouvertures respectives ménagées sur le carter 32, à travers la surface concave sur laquelle s'appuie le boîtier de filtrage 4. Ainsi l'air provenant du milieu extérieur 6 s'introduit dans l'espace interne 5 pour refroidir la pompe 2 puis pénètre dans le filtre 4 via la seconde ouverture o2 qui communique avec l'orifice d'entrée 4e. Cet air est ensuite filtré puis ressort du filtre par l'orifice de sortie 4s et est de nouveau dirigé vers l'intérieur de l'enceinte 3 via la troisième ouverture o3.

On précisera que l'orifice d'aspiration 2a de la pompe 2 peut directement communiquer avec la troisième ouverture o3 du carter 32. La surface de contour de l'orifice d'aspiration 2a peut par exemple être en contact direct et de façon hermétique avec la surface de contour de la troisième ouverture o3. Ainsi, l'air filtré venant de la pompe est dirigé directement vers l'orifice d'aspiration 2a de la pompe 2.

De façon analogue, l'orifice de refoulement 2r de la pompe 2 peut directement communiquer avec une quatrième ouverture o4 ménagée sur le carter 32. Les surfaces de contour de ces orifices peuvent être en contact direct et hermétique l'une avec l'autre. Ainsi l'air sortant de la pompe par l'orifice de refoulement 2r traverse la quatrième ouverture o4, puis est dirigé sous pression vers l'organe fonctionnel, via une canalisation (non représentée).

Dans une autre variante de réalisation, on comprendra que le boîtier de filtrage 4 de l'air peut être distant de l'enceinte phonique 3 et être raccordé à celle-ci par des moyens de canalisation de type classique.

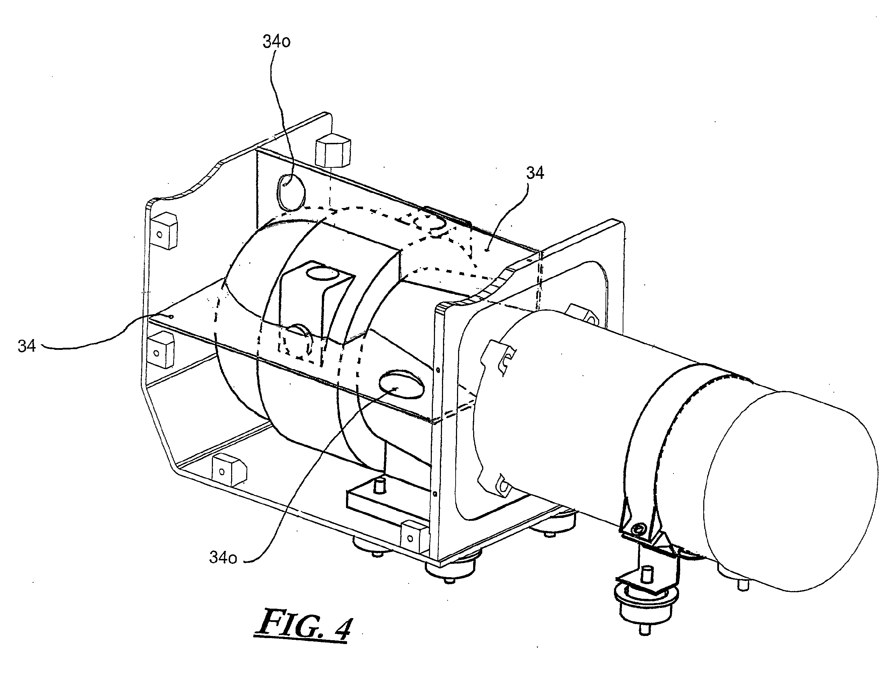

Selon l'invention, une ou plusieurs parois 34 formant une chicane peuvent être disposées à l'intérieur de l'enceinte phonique 3, entre cette dernière et le corps de la pompe 2 (figure 4). Ces parois 34 peuvent être de forme plate, disposées selon la direction longitudinale de la pompe 2, c'est à dire parallèlement à l'axe 21 de rotation des ailettes et être orientées par exemple verticalement et/ou horizontalement comme le montre la figure 4. Ces parois 34 séparent ainsi différentes chambres de circulation d'air autour de la pompe 2, qui communiquent par des orifices 34o placés en quinconce à l'une ou l'autre des extrémités de chaque paroi 34. De cette façon, l'air pénétrant dans l'enceinte phonique 3 sous l'effet de l'aspiration est forcément guidé dans les différentes chambres, autour de la pompe 2, avant de ressortir de l'enceinte 3. Il est ainsi possible d'améliorer le refroidissement de la pompe 2 en augmentant sa surface de contact avec l'air.

Avantageusement, on comprend à la lecture de la description ci-dessus, que le dispositif de pompage de la présente invention est particulièrement silencieux, apte à se refroidir de façon efficace et permet une maintenance relativement aisée.

Bien que l'invention ait été décrite en liaison avec un mode de réalisation particulier, elle comprend tous les équivalents techniques des moyens décrits.

On comprendra, par exemple, qu'en variante de réalisation, l'enceinte phonique peut avoir la forme générale d'un tube fermé à ses deux extrémités.

## Revendications

1. Dispositif de pompage de l'air d'alimentation d'un organe fonctionnel de véhicule automobile, comprenant une pompe rotative (2) à ailettes entraînées en rotation par un moteur électrique (1), ladite pompe (2) étant logée dans une enceinte phonique (3) destinée à supprimer ou atténuer ses bruits de fonctionnement, **caractérisé en ce qu'**un espace interne (5) de circulation d'air est ménagé entre l'enceinte (3) et au moins une partie du corps de la pompe (2), ledit espace interne (5) communiquant d'une part avec le milieu extérieur (6) de l'enceinte (3) par une première ouverture (o1) ménagée sur l'enceinte (3), et d'autre part avec un orifice d'aspiration (2a) de la pompe (2), de sorte que l'air du milieu extérieur (6) passe par l'ouverture (o1) et transite par l'espace interne (5) lorsqu'il est aspiré par la pompe (2), pour favoriser le refroidissement de la pompe (2) par conduction thermique.

2. Dispositif de pompage selon la revendication 1, **caractérisé en ce qu'**il comprend un boîtier de filtrage (4) d'air situé à l'extérieur de l'enceinte phonique (3), dont les orifices d'entrée (4e) et de sortie (4s) d'air communiquent respectivement avec l'espace interne (5) de l'enceinte (3) via une seconde ouverture (o2) et avec l'orifice d'aspiration (2a) de la pompe (2) via une troisième ouverture (o3) ménagées sur l'enceinte (3), de sorte que l'air du milieu extérieur (6) transite par l'espace interne puis par le boîtier de filtrage (4) lorsqu'il est aspiré par la pompe (2).

3. Dispositif de pompage selon la revendication 2, **caractérisé en ce que** le boîtier de filtrage (4) est solidaire de l'enceinte phonique (3).

4. Dispositif de pompage selon l'une quelconque des revendications 2 ou 3, **caractérisé en ce qu'**un orifice de refoulement (2r) d'air en sortie de la pompe (2) communique avec l'organe fonctionnel du véhicule via une quatrième ouverture (o4) ménagée sur l'enceinte phonique, permettant le passage de l'air refoulé vers l'organe fonctionnel.

5. Dispositif de pompage selon l'une quelconque des revendications 2 à 4, **caractérisé en ce que** l'enceinte phonique (3) comporte un carter (32) constitué d'une plaque repliée sensiblement selon deux angles droits de façon à présenter la forme générale d'un U apte à enfourcher le corps de la pompe (2).

6. Dispositif de pompage selon la revendication 5, **caractérisé en ce que** le boîtier de filtrage (4) d'air a une forme générale cylindrique fixée sur la partie centrale (32C) du carter (32) en U, de façon sensiblement parallèle aux arêtes (32A, 32A') de pliage du U, du côté opposé aux branches du U.

7. Dispositif de pompage selon l'une quelconque des revendications 5 ou 6, **caractérisé en ce que** l'enceinte phonique (3) comprend un support (31) constitué d'une plaque repliée sensiblement en forme de L assemblée et solidarisée avec le U du carter (32) de façon à présenter la forme générale d'un récipient ouvert du côté opposé à la partie courte (31C) du L, tandis qu'un couvercle (33) sensiblement plat de fermeture du récipient est assemblé et solidarisé avec le support (31) et le carter (32) de façon sensiblement parallèle à la partie courte (31C) du support en L.

8. Dispositif de pompage selon la revendication 7, **caractérisé en ce que** la pompe (2) est fixée sur la partie longue (31 L) du support en L à l'intérieur de l'enceinte phonique (3), l'axe de rotation des ailettes étant sensiblement perpendiculaire au couvercle (33), et étant solidarisé en rotation avec un axe d'entraînement (11) du moteur qui traverse ledit couvercle (33) via une ouverture (33o).

9. Dispositif de pompage selon la revendication 8, **caractérisé en ce que** le corps du moteur (1) est solidarisé avec le couvercle (33).

10. Dispositif de pompage selon l'une quelconque des revendications 1 à 9, **caractérisé en ce qu'**au moins une partie de l'enceinte phonique (3) est recouverte intérieurement d'un revêtement isolant phonique.

11. Dispositif de pompage selon l'une quelconque des revendications 1 à 10, **caractérisé en ce qu'**au moins une paroi (34) formant une chicane est disposée entre l'enceinte phonique (3) et le corps de la pompe (2) pour assurer qu'une surface minimale donnée du corps de la pompe (2) sera mise au contact de l'air venant du milieu extérieur (6), dans le but de favoriser le refroidissement de la pompe lors de l'aspiration.

12. Dispositif de pompage selon la revendication 11, **caractérisé en ce qu'**une pluralité de parois (34), de forme sensiblement plate, relie la surface périphérique du corps de la pompe (2) à l'enceinte phonique (3), dans des plans passant sensiblement par l'axe de rotation des ailettes, les parois étant conformées pour séparer différentes chambres de circulation d'air autour de la pompe (2), communiquant entre elles par des orifices (34o) ménagés en quinconce à l'une ou l'autre des extrémités de chaque paroi.

13. Sous-ensemble de pile à combustible à électrolyte polymère, du type alimentée en hydrogène et en air, **caractérisé en ce qu'**il comprend un dispositif de pompage de l'air d'alimentation conforme à l'une quelconque des revendications précédentes.
